# EUROPEAN PATENT APPLICATION

(11) **EP 1 319 698 A1**
(43) Date of publication of application: **18.06.2003**
(21) Application number: 01204840.1
(22) Date of filing: 12.12.2001
(51) Int. Cl.: C09D 167/00, C09D 201/08, B05D 1/26

(54) **Method for hotmelt application**

(71) Applicant: DSM N.V., 6411 TE Heerlen (NL)
(72) Inventor: van Benthem, Rudolfus Antonius Theodorus Maria, 6141 BR Limbricht (NL); Beetsma, Jochum, 8022 RE Zwolle (NL); Muscat, Dirk, 52538 Gangelt-Birgden (DE)
(74) Representative: van Tol-Koutstaal, Charlotte Adeliene

(57) **Abstract**

The invention relates to a method for hotmelt application of a thermosetting formulation, which comprises a binder composition containing a resin and a crosslinker that form volatile compounds upon reaction with each other whereby the thermosetting formulation is converted into a hotmelt and stored in a hotmelt unit, wherein the release of a substantial amount of volatile component from the hotmelt unit is prevented during the storage of the hotmelt in the hotmelt unit. The invention also relates to the use in a hotmelt of a binder composition comprising a resin and a crosslinker, that form volatile components upon reaction.

## Description

The present invention relates to a method for hotmelt application of a thermosetting formulation, which comprises a binder composition containing a resin and a crosslinker that form volatile compounds upon reaction with each other whereby the thermosetting formulation is converted into a hotmelt and is stored in a hotmelt unit. The invention also relates to the use in a hotmelt of a binder composition comprising a resin and a crosslinker, that form volatile compounds upon reaction.

A hotmelt application is generally known as an application in which a thermosetting formulation is converted into a molten state by heating before being applied. This is a physical process that can be achieved by heating the binder composition either above its melting point or above the glass transition temperature, depending on the crystallinity of the resin in the powder paint binder composition. Where only the glass transition temperature (Tg) is mentioned, melting temperature is to be included if applicable. The thermosetting formulation in molten state before being applied, is referred to as hotmelt.

Presently, it is a drawback of hotmelt applications that premature crosslinking of the hotmelt occurs, resulting in an increase of viscosity of the hotmelt that may cause clogged or fouled equipment. These drawbacks are for example described in WO95/21706.

The object of the present invention is to provide a method for a hotmelt application which overcomes the problem of clogged or fouled equipment due to premature crosslinking of the hotmelt.

The present invention reaches this object by preventing the release of a substantial amount of volatile component from the hotmelt unit during the storage of the hotmelt in the hotmelt unit.

The hotmelt unit is here and hereafter defined as an operating unit in which the thermosetting formulation is converted into a hotmelt by heating and in which the hotmelt can be stored before being applied. There are several methods to prevent or to control the release of volatile components from the hotmelt unit during storage of the hotmelt. According to a preferred embodiment of the invention the release of volatile components is prevented by the use of a fully closed hotmelt unit from which no volatile components can escape at all. According to another preferred embodiment of the invention the release of volatile components may be prevented by the use of means capable of controlling the release of volatile components from an operating unit, for example a closable valve.

The method according to the invention results in a lower increase in viscosity of the hotmelt, preventing clogged or fouled equipment. Increase in viscosity is here and hereafter defined as the difference between the final viscosity of the hotmelt and the original viscosity of the hotmelt, measured at the same temperature. The original viscosity refers to the viscosity at the end of the conversion of the thermosetting paint formulation into the hotmelt. The final viscosity refers to the viscosity of the hotmelt at the moment it is going to be applied.

The viscosity can for example be measured by determining the meltviscosity using a rotation viscometer with a plate-plate geometry according to the following testmethod. The sample, the resin or the binder composition, which is to be measured is put in the viscometer. The used viscometer is a Rheometrics viscometer, comprising a CP5 heated baseplate unit, a RM 263 measurementhead and a RM 265 control unit. The viscometer is furthermore equipped with a PP3300 spindel (diameter 30 mm). The distance between the plates is 0,500 mm. The viscosity determination takes place at a temperature of 160°C and a shear rate of 70 sec⁻¹.

The increase in viscosity of the hotmelt during storage of the hotmelt is a measure for the degree of chain extension and/or crosslinking of the hotmelt. The more the viscosity increases, the higher the degree of chain extension and/or crosslinking. Generally the increase in viscosity of the hotmelt during storage has to be less than 400%. The method according to the invention generally results in an increase of the viscosity of the hotmelt of not more than 300% during the storage in the hotmelt unit, preferably not more than 100%, more preferably not more than 20% and most preferably not more than 10%. In certain cases, the method according to the invention even results in a stable viscosity in time of the hotmelt in the hotmelt unit.

An additional advantage of the method according to the invention is that the relatively low, if any, increase in viscosity of the hotmelt is acceptable for the further application on a substrate. The lower the viscosity of the hotmelt, the better the flow of the hotmelt and the faster the hotmelt can be applied.

The storage time of the hotmelt in the hotmelt unit is here and hereafter defined as the time difference between the conversion of the thermosetting formulation into the hotmelt and the application of the hotmelt onto a substrate. The term 'during storage' is therefore to be understood as the storage time. The hotmelt can be stored in the hotmelt unit for a varying amount of time, dependent on factors as for example application speed, desired layer thickness, and/or throughput efficiency. In case of a malfunctioning part of the apparatus or an accident in the factory, the storage time can even be prolonged.

The binder composition comprises a resin and a crosslinker that form a volatile component upon reaction. The volatile component is a component having such a vapour pressure that it has a vaporous or a gaseous form in the hotmelt unit. Suitable volatile components include for example methanol, ethanol, water and carbon dioxide. In case a blocked resin and/or a blocked crosslinker is present in the binder composition, the formed volatile component may be the blocking agent. Examples of suitable blocking agents are caprolactam, oximes, butane, 3,5-dimethylpyrazole, 1,2,4-triazole, diethyl malonate and alcohols, for example butanol.

The resin of the present invention will have a total amount of 'y' functional groups and the crosslinker will have a total amount of 'x' compatible functional groups. Generally, per combination of one functional group of the resin with one compatible functional group of the crosslinker, one molecule of volatile component is formed. One can derive from this that the maximum amount of molecules volatile compound to be formed, hereafter referred to as 'a', to be either equal to 'y' or 'x', whichever amount is least.

The present invention requires that during storage of the hotmelt in the hotmelt unit no substantial amount of volatile component is released. Generally with a substantial amount is meant not more than 20% of 'a', preferably not more than 10% of 'a', more preferably not more than 1% of 'a', and most preferably no volatile component is released.

It is also possible that a volatile component is added to the hotmelt unit, optionally under pressure, to the hotmelt unit. Preferably the chemical equivalent of the volatile compound which is formed during the reaction of the resin and the crosslinker of the binder composition is added as volatile compound. In case the added volatile component is chemically equivalent to the volatile compound which is formed during the reaction, the amount of volatile compound added to the hotmelt unit is to be subtracted from the total amount of volatile components released when determining the amount of volatile components released. In a preferred embodiment of the invention not more volatile component is released than added to the hotmelt unit.

Examples of suitable resins are polyurethanes, epoxy resins and/or polycondensates, for example polyesters and/or polyacrylates. The production of the different types of resins is known to the man skilled in the art. In a preferred embodiment of the invention the resin is a polycondensate with carboxylic acid functional groups. In another preferred embodiment polyesters are used, because the use of polyesters results in superior mechanical properties and outdoor durability of the final coating. Polyesters can contain reactive hydroxyl groups and/or carboxylic acid groups, with which the polyester can react with the crosslinker. Preferably the polyesters contain reactive carboxylic acid groups and/or activated acid groups. An activated acid group is a reactive group derivable from reacting an acid group with another compound, for example a methanol.
The amount of reactive groups of the resin can vary, depending on the desired properties. Preferably the resin has a concentration of reactive groups equivalent with 20-120 mg KOH/g resin, more preferably between 30-100 mg KOH/g resin and most preferably between 40-80 mg KOH/g resin.

A crosslinker suitable to be applied in the present invention may be any crosslinker containing functional groups capable of reacting with the functional groups of the resin, whereby upon reaction with these resins volatile compounds are released. This is defined here and hereafter as a compatible crosslinker. The combination of resin and crosslinker is here and hereafter defined as a compatible combination of resin and crosslinker. The ratio between the resin and the crosslinker is generally such that the ratio between the reactive groups of the resin and the crosslinker is between 2 and 0,5.

Examples of compatible combinations of resin and crosslinker are given in 'Powder Coatings, Chemistry and Technology' (Wiley, 1991) of T.A. Misev, pg 44-81. Preferably the crosslinkers are capable of reacting with carboxylic acid functional groups. These carboxylic acid functional groups can be present in various resins, for example in polycondensates, for example carboxylic acid functional polyesters. Examples of suitable crosslinkers that react with carboxylic acid functional groups are aminoresins and β-hydroxyalkylamides. Examples of suitable aminoresins are condensates of formaldehyde with amine containing compounds like urea, melamine, glycouril and methylated and/or butylated derivatives thereof like hexamethoxy-methylmelamine (HMMM) and tetra-methoxy-methyl-glycouril. Examples of β-hydroxyalkylamides are PRIMID™ XL-552 (EMS) and PRIMID™ QM-1260 (EMS).

Preferably the crosslinker is a β-substituted β-hydroxyalkylamide. These β-substituted β-hydroxyalkylamides may be obtained by reacting an anhydride with an amine, for example an alkanolamine as described in EP-A-1127931. Other suitable examples of β-substituted-β-hydroxyalkylamides are condensation polymers obtainable by polycondensation of mono- and/or bis-hydroxyalkylamides or bivalent carboxylic acids as for example described in WO 99/16810, which content is incorporated herein by reference. According to WO99/16810 it is also possible to obtain these condensation polymers by reacting a cyclic anhydride with an alkanolamine, resulting in a hydroxylamide that is converted into a polymer by polycondensation. These β-substituted-β-hydroxyalkylamides are preferred, because the use of these β-substituted-β-hydroxyalkylamides results in an exceptionally low increase in viscosity of the thermosetting formulation due to reaction between the resin and the crosslinker during storage of the hotmelt. Preferably the molar ratio between anhydride and the alkanolamine is between 1:1 and 1:2. The use of a higher molar ratio results in a crosslinked product with less desirable properties due to the presence of too many aminegroups in the crosslinker. Using a lower molar ratio results in a low amount of crosslinks in the crosslinked product. Preferably the molar ratio between anhydride and alkanolamine is between 1:1,1 and 1:1,5.

Preferably the anhydride is succinic acid anhydride, hexahydrophthalic acid anhydride and/or phthalic acid anhydride. Preferably the alkanolamine is di-isopropanol amine. According to a further preferred embodiment of the invention the anhydride is succinic acid anhydride, hexahydrophthalic acid anhydride and/or phthalic acid anhydride and the alkanolamine is di-isopropanol amine as alkanolamine, which results in good reactivity and good color properties of the crosslinked product. Even more preferred is the reaction between phthalic acid anhydride with di-isopropanol amine. An advantage of this preference is the high hardness of the crosslinked product. Most preferred is a molar ratio of phthalic acid anhydride to di-isopropanol amine of between 1:1,1 and 1:1,4.

Also mixtures of resins and/or crosslinkers are suitable for the invention. When the binder composition comprises more than one crosslinker and/or more than one resin, it is not necessary for all compatible resin crosslinker combinations to form a volatile component upon reaction with each other. However, in case of presence of one compatible resin crosslinker combination which does not form a volatile component upon reaction with each other, the amount of this combination should generally be lower than 10 wt %, more preferably lower than 5 wt % and most preferably lower than 3 wt % (based on the total weight of the binder composition). When more than one compatible resin crosslinker combination which does not form a volatile component upon reaction with each other is present, the amount of the total of these combinations is generally lower than 10 wt %, more preferably lower than 5 wt % and most preferably lower than 3 wt % (based on the total weight of the binder composition).

The hotmelt can be applied in various ways and for various purposes. The hotmelt may, for example, be applied onto a substrate, used as a sealant, used as an adhesive between various substrates or used for injection moulding. The substrate may be an organic or an inorganic material. Examples of suitable inorganic substrates are metal, glass, ceramics, rock and concrete. Examples of suitable organic substrates are paper, wood, leather, cork and plastics. Another example of a suitable substrate is a tufted carpet, on which the hotmelt can be applied as carpet backing. The application of the hotmelt can for example be a batch or a continuous process. The application mostly takes place with use of an applicator, for example a roll applicator or a spray applicator. The hotmelt may be applied in a coating, an adhesive or a carpet backing.

According to a preferred embodiment of the invention the thermosetting formulation is a thermosetting paint formulation. The thermosetting paint formulation may also comprise pigments and/or the usual additives. The pigments may be organic and/or inorganic. Examples of suitable additives are fillers, dispersion agents, flow agents, degassing agents, stabilizers and anti-foam agents. The thermosetting paint formulation may be in all kind of forms. Preferably the thermosetting paint formulation is a powder paint formulation. An advantage of using a hotmelt based on a powder paint formulation according to the invention is that such powder paint formulation can be used in an application technique suitable for can and coil coatings, like roll application. Normally the application techniques suitable for can and coil coatings can only be executed by the use of liquid paints. Application and subsequently curing of the hotmelt based on a thermosetting powder paint formulation on a substrate results in a fully or partly coated substrate.

The invention also relates to the use of a binder composition comprising a resin and a crosslinker that form volatile compounds upon reaction with each other in a hotmelt. It has surprisingly been found that the invention works especially well when the resin is a polycondensate with carboxylic acid functional groups and that the crosslinker is a β-hydroxyalkylamide. The increase of viscosity of the hotmelt during storage is exceptionally low. Preferably the crosslinker is a β-substituted β-hydroxyalkylamide based on an anhydride and an amine. Preferably the polycondensate is a polyester comprising carboxylic acid functional groups.

## Claims

1. Method for hotmelt application of a thermosetting formulation, which comprises a binder composition comprising a resin and a crosslinker that form volatile compounds upon reaction with each other whereby the thermosetting formulation is converted into a hotmelt and stored in a hotmelt unit, **characterised in that** the release of a substantial amount of volatile component from the hotmelt unit is prevented during the storage of the hotmelt in the hotmelt unit.

2. Method for hotmelt application according to claim 1, **characterised in that** the viscosity of the hotmelt does not increase more than 300% during storage in the hotmelt unit.

3. Method for hotmelt application according to any one of claims 1-2, **characterised in that** the resin is a polycondensate with carboxylic acid functional groups and the crosslinker a β-hydroxyalkylamide.

4. Method for hotmelt application according to any one of claims 1-3, **characterised in that** the crosslinker is a β-substituted β-hydroxyalkylamide.

5. Method for hotmelt application according to any one of claims 1-4, **characterized in that** a volatile component is added to the hotmelt unit.

6. Method for hotmelt application according to any one of claims 1-5, **characterised in that** the thermosetting formulation is a thermosetting paint formulation.

7. Use in a hotmelt of a binder composition comprising a resin and a crosslinker that form volatile compounds upon reaction, **characterised in that** the resin is a polycondensate with carboxylic acid functional groups and that the crosslinker is a β-hydroxyalkylamide.

8. Use of a binder composition according to claim 7, **characterised in that** the crosslinker is a β-substituted β-hydroxyalkylamide.

9. Use of a binder composition according to any one of claims 7-8, **characterised in that** the resin is a polyester containing carboxylic acid functional groups.
